# EUROPÄISCHE PATENTSCHRIFT

(11) **EP 1 304 583 B1**
(45) Veröffentlichungstag und Bekanntmachung des Hinweises auf die Patenterteilung: **26.04.2006**
(21) Anmeldenummer: 02021119.9
(22) Anmeldetag: 23.09.2002
(51) Int. Cl.: G01S 7/481, G01S 7/497

(54) **Verfahren zur Objekterkennung und/oder -verfolgung**
Method for recognising and/or tracking objects
Procédé de reconnaissance et/ou de suivi d'objets

(30) Priorität: 22.10.2001 DE 10151979
(43) Veröffentlichungstag der Anmeldung: 23.04.2003
(73) Patentinhaber: IBEO Automobile Sensor GmbH, 22179 Hamburg (DE)
(72) Erfinder: Lages, Ulrich, Dr., 21031 Hamburg (DE)
(74) Vertreter: Manitz, Finsterwald & Partner GbR

(56) Entgegenhaltungen:
- EP-A- 0 636 903
- EP-A- 1 302 784
- DE-A- 2 833 635
- DE-A- 19 850 639
- DE-A- 19 945 268

## Beschreibung

Die Erfindung betrifft ein Verfahren zur Objekterkennung und/oder -verfolgung mittels einer optoelektronischen Erfassungseinrichtung, die wenigstens einen während des Betriebs eine Abtastbewegung ausführenden Sensor umfaßt, mit dem während des Abtastbetriebs in einen Überwachungsbereich insbesondere gepulste elektromagnetische Strahlung ausgesandt und aus dem Überwachungsbereich reflektierte Strahlung empfangen und ausgewertet wird.

Derartige Verfahren sind grundsätzlich bekannt und dienen beispielsweise bei Anbringung des Sensors an einem Fahrzeug dazu, während des Fahrbetriebs im Überwachungsbereich vorhandene Objekte wie insbesondere andere Verkehrsteilnehmer, Hindernisse und Fahrbahnbegrenzungen zu erkennen und ggf. zu verfolgen.

Problematisch hierbei ist, daß die Fähigkeit zu einer sicheren Objekterkennung und/oder -verfolgung durch Störungen, die einen bestimmungsgemäßen Betrieb der optoelektronischen Erfassungseinrichtung beeinträchtigen, eingeschränkt wird. Derartige Störungen können beispielsweise durch Verschmutzungen oder Beschädigungen des Sensors hervorgerufen werden. [Aus der nach dem Prioritätstag veröffentlichten EP 1 302 784 A2 ist eine bewegbare Schutzabdeckung für einen Sensor einer optoelektronischen Erfassungseinrichtung bekannt.

DE 198 50 639 A 1 beschreibt eine an einem Fahrzeug angebrachte Radarantenne, der ein bewegbarer Film vorgelagert ist, welcher in zwei Betriebsmodi betrieben werden kann, nämlich entweder in einem Stillstandsmodus oder einem Bewegungsmodus, in welchem der Film permanent umläuft, wobei im Bewegungsmodus zwei Unterschiedliche Geschwindigkeiten möglich sind. Die Bewegbarkeit des Filmes dient dazu, die Außenseite des Filmes an Wischbürsten vorbeizubewegen. In Abhängigkeit von dem Ausmaß einer Verschmutzung der Außenseite des Filmes kann eine schnelle oder langsame Bewegung des Filmes gewählt werden.

Aus DE OS 28 33 635 ist eine Einrichtung zur Messung der Verschmutzung von optischen Grenzflächen, insbesondere bei optischen Sendern und/oder Empfängern bekannt.

EP 0 636 903 A1 beschreibt im Zusammenhang mit einer Einrichtung zur Abstandsmessung die Möglichkeit, im Fall einer Verschmutzung die Ausgangsleistung einer Laserdiode zu erhöhen.

Aufgabe der Erfindung ist es, ein Verfahren der eingangs genannten Art zu schaffen, welches es gestattet, auf mögliche Störungen des bestimmungsgemäßen Betriebs der optoelektronischen Erfassungseinrichtung derart zu reagieren, daß die Fähigkeit zu einer sicheren Erkennung und/oder -verfolgung von Objekten durch die Störungen nicht eingeschränkt wird.

Die Lösung dieser Aufgabe erfolgt durch die Merkmale des Anspruchs 1.

Erfindungsgemäß wird eine Schutzabdeckung verwendet, die den Sensor zumindest teilweise umgibt und zumindest bereichsweise für die verwendete Strahlung durchlässig ist. Bei der Schutzabdeckung kann es sich beispielsweise um eine rotationssymmetrische, haubenförmige Abdeckung handeln, die z.B. eine Konusform und einen trapezförmigen Querschnitt aufweist. Durch eine derartige Schutzabdeckung kann der Sensor vor äußeren Einflüssen wie insbesondere Verschmutzungen geschützt werden.

Bei dem erfindungsgemäßen Verfahren werden solche Störungen erkannt, die den Betrieb des Sensors beeinträchtigen oder zumindest potentiell in der Lage sind, eine Betriebsstörung hervorzurufen. Hierbei handelt es sich beispielsweise um Verschmutzungen oder Beschädigungen der Schutzabdeckung, welche die Ausbreitung der vom Sensor ausgesandten und/oder zu empfangenen Strahlung beeinträchtigen. Eine Störung kann auch dadurch hervorgerufen werden, daß sich ein Objekt - beispielsweise ein Körperteil einer Person - der in einem Normalbetriebsmodus ununterbrochen rotierenden Schutzabdeckung nähert und diese Rotationsbewegung der Schutzabdeckung im Begriff ist, eine Gefahr für die betreffende Person darzustellen. Um die Gefährdung auszuschließen und beispielsweise zu verhindern, daß die Hand eines Kindes eingeklemmt wird, kann der Normalbetriebsmodus der Schutzabdeckung nicht länger aufrecht erhalten werden. Bevorzugt wird die Rotation der Abdeckung in einem solchen Fall gestoppt, wobei der unter der Abdeckung befindliche Sensor jedoch weiterhin arbeitet und dadurch insbesondere auch erkennen-kann, wenn sich die Hand wieder von der Abdeckung entfernt, woraufhin diese - soweit z.B. bei Regen erforderlich - wieder in Rotation versetzt wird:

Störungen können erfindungsgemäß beispielsweise daran erkannt werden, daß für bestimmte Abtastrichtungen überhaupt keine oder unter einer erwarteten Intensität bleibende reflektierte Strahlung nachgewiesen wird. Hierdurch können beispielsweise Verschmutzungen und Beschädigungen der Schutzabdeckung als solche identifiziert werden. Ferner können Störungen dadurch erkannt werden, daß bei der Objekterkennung und/oder -verfolgung festgestellt wird, daß sich dem Sensor bzw. dessen Schutzabdeckung ein Objekt - z.B. die oben erwähnte Kinderhand - so weit genähert hat, daß es zumindest als potentielle Betriebsstörung angesehen werden muß.

Potentielle Störungen können z.B. durch das Erkennen von Situationen berücksichtigt werden, welche die Störungen wahrscheinlich werden lassen d.h. durch das Erkennen bestimmter Situationen können die Störungen zu einem Zeitpunkt "erkannt" oder mit einer bestimmten Wahrscheinlichkeit vorhergesagt werden, an dem die Störwirkung noch nicht oder lediglich in einem geringen Ausmaß eingetreten ist. So kann zum Beispiel Regen erkannt und damit auf das baldige Auftreten von verschmutztem Spritzwasser geschlossen werden, woraufhin die Schutzabdeckung z.B. in Bewegung gesetzt wird.

Erfindungsgemäß wird im Anschluß an die Erkennung einer den Betrieb des Sensors zumindest potentiell beeinträchtigenden Störung der Bewegungszustand der Schutzabdeckung relativ zum Sensor verändert, und zwar in einer Weise derart, daß die Störwirkung abgemildert oder beseitigt wird.

Gemäß der Erfindung kann somit die Erkennung einer Störung selbst der Auslöser für die Abmilderung oder Beseitigung ihrer störenden Wirkung sein. Dabei wird die Bewegbarkeit der Schutzabdeckung ausgenutzt. Die Änderung des Bewegungszustands der Schutzabdeckung kann beispielsweise darin bestehen, die Schutzabdeckung aus einem Stillstandszustand heraus in Bewegung zu setzen, eine vorhandene Bewegung der Schutzabdeckung zwar grundsätzlich beizubehalten, jedoch hinsichtlich bestimmter Bewegungsmerkmale wie z.B. Drehzahl oder Drehrichtung zu verändern, oder eine vorhandene Bewegung der Schutzabdeckung zu beenden.

Erfindungsgemäß werden die Störungen auf der Basis von mittels des Sensors gewonnenen Informationen erkannt. Der Sensor ist hierdurch in der Lage, den eigenen Betrieb möglicherweise beeinträchtigende Störungen selbst zu erkennen. Alternativ oder zusätzlich ist es möglich, für die Erkennung der Störungen auf Informationen zurückzugreifen, die mittels sensorfremder Einrichtun- . gen gewonnen werden.

Bei den sensorfremden Einrichtungen kann es sich um andere, grundsätzlich auch identisch ausgebildete Sensoren wie z.B. Laserscanner handeln. Prinzipiell kommt für die Störungserkennung jede beliebige Einrichtung in Frage, mit der Informationen über das Fahrzeug oder dessen Umgebung beschafft werden können.

Bevorzugt steht die Schutzabdeckung im Normalbetriebszustand still und wird in Bewegung gesetzt, sobald eine Störung, z.B. eine Verschmutzung oder eine erwartete Verschmutzung, erkannt wird. Unnötige Bewegungen der Schutzabdeckung und insbesondere unnötige Relativbewegungen zu mit der Schutzabdeckung in Kontakt stehenden Reinigungseinrichtungen werden im Normalbetriebszustand der Schutzabdeckung folglich vermieden.

In einer besonders bevorzugten Ausführungsform der Erfindung wird als Sensor ein Laserscanner verwendet. Insbesondere handelt es sich dabei um einen Laserscanner, der innerhalb wenigstens einer Abtastebene und vorzugsweise innerhalb mehrerer Abtastebenen jeweils Entfernungen und zu jeder Entfernung einen auf eine vorgegebene Achse bezogenen Winkel mißt. Die Entfernungsmessung erfolgt dabei bevorzugt nach einem Pulslaufzeitmeßverfahren.

Ferner ist es bevorzugt, wenn die Änderung des Bewegungszustandes der Schutzabdeckung im Anschluß an die Erkennung einer Störung automatisch erfolgt.

Gemäß einer weiteren Variante der Erfindung wird der Bewegungszustand der Schutzabdeckung situationsadaptiv verändert. Dabei erfolgt die Änderung des Bewegungszustands der Schutzabdeckung insbesondere in Abhängigkeit von vom Sensor selbst und/oder von sensorfremden Einrichtungen erfaßten Situationen im Überwachungsbereich. Bestimmte Situationen wie beispielsweise vom Sensor "gesehene" Verkehrsszenen während eines Fahrbetriebs können auf diese Weise z.B. ein vorgegebenes Bewegungsverhalten der Schutzabdeckung hervorrufen.

Alternativ oder zusätzlich kann erfindungsgemäß vorgesehen sein, daß der Bewegungszustand der Schutzabdeckung gefährdungsadaptiv verändert wird. Insbesondere vom Sensor selbst und/oder von sensorfremden Einrichtungen erfaßte Gefahrensituationen im Überwachungsbereich können vorgegebene Bewegungsarten der Schutzabdeckung bewirken. Eine Gefahrensituation liegt beispielsweise vor, wenn sich ein Objekt der Schutzabdeckung so weit nähert, daß ein vorgegebener Mindestabstand unterschritten wird.

In einer bevorzugten Ausführungsform der Erfindung wird eine Bewegung, bei der es sich insbesondere um eine Drehbewegung handelt, der Schutzabdeckung verlangsamt oder gestoppt, wenn eine Situation erfaßt wird, die mit einer bestimmten Wahrscheinlichkeit aufgrund der Bewegung der Schutzabdeckung zu einer Gefährdung einer Person, eines Gegenstandes ünd/oder des Sensors selbst führt.

Ferner kann alternativ oder zusätzlich vorgesehen sein, daß der Bewegungszustand der Schutzabdeckung verschmutzungsadaptiv verändert wird. Die Änderung erfolgt insbesondere in Abhängigkeit von der Art und/ oder dem Grad einer Verschmutzung der Schutzabdeckung, wobei bevorzugt der Sensor selbst die Verschmutzung als solche erkennt. Hierbei wird als Reaktion auf eine erkannte Verschmutzung der Bewegungszustand der Schutzabdeckung derart verändert, daß die Störwirkung abgemildert oder beseitigt wird, indem beispielsweise der verschmutzte Bereich der Schutzabdeckung in eine nichtstörende Position überführt oder die Verschmutzung beseitigt wird.

In einer Variante des erfindungsgemäßen Verfahrens wird die Schutzabdeckung zumindest während des Abtastbetriebs des Sensors ununterbrochen bewegt. Beispielsweise kann eine Drehbewegung der Schutzabdeckung mit einer Rotationsbewegung synchronisiert werden, die eine Strahlungsumlenkeinrichtung eines als Sensor dienenden Scanners oder der Scanner als Ganzes ausführt. Dabei können die Schutzabdeckung einerseits und der Sensor bzw. die Strahlungsumlenkeinrichtung andererseits mit der gleichen Drehzahl oder mit voneinander abweichenden Drehzahlen rotieren. Die Drehrichtungen können übereinstimmen oder entgegengesetzt sein. Bei gleichen Drehzahlen kann die Änderung des Bewegungszustands der Schutzabdeckung beispielsweise darin bestehen, daß die Schutzabdeckung vorübergehend beschleunigt oder abgebremst wird und anschließend wieder mit der ursprünglichen Drehzahl des Sensors bzw. der Strahlungsumlenkeinrichtung rotiert. Hierdurch wird erreicht, daß am Ende dieses Änderungsvorgangs der Sensor durch einen anderen Bereich der Schutzabdeckung hindurch "blickt". Die Störwirkung von Verschmutzungen und/oder Beschädigungen, z.B. Kratzern, kann auf diese Weise beseitigt werden.

Allgemein ist in einer bevorzugten Variante der Erfindung vorgesehen, daß als Störung ein die Ausbreitung der vom Sensor ausgesandten und/oder zu empfangenen Strahlung zumindest potentiell beeinträchtigender Störbereich der Schutzbedeckung erkannt und der Störbereich durch Bewegen der Schutzabdeckung in eine nichtstörende Position überführt wird.

Bei dem Störbereich handelt es sich insbesondere um eine Verschmutzung oder Beschädigung der Schutzabdeckung. Der Störbereich kann beispielsweise aus dem Sichtbereich des Sensors heraus bewegt werden. Ferner ist es möglich, den Störbereich in den Wirkungsbereich von Reinigungseinrichtungen hinein zu bewegen.

Es ist auch möglich, daß der Störbereich innerhalb des Sichtbereiches des Sensors bewegt wird. Dabei ist es bevorzugt, wenn der Störbereich aus einer Region von besonderem Interesse des Sichtbereiches des Sensors heraus bewegt wird.

Vorzugsweise wird die Schutzabdeckung derart bewegt, daß der Störbereich in eine vorgebbare Position relativ zu wenigstens einer Region von besonderem Interesse des Sichtbereiches des Sensors überführt wird.

Gemäß einer weiteren bevorzugten Ausführungsform der Erfindung wird der Störbereich in einer vorgebbaren Position relativ zu wenigstens einer Region von besonderem Interesse des Sichtbereiches des Sensors gehalten. Von Vorteil ist dies insbesondere dann, wenn die Region von besonderem Interesse ihre Lage innerhalb des Sichtbereiches des Sensors verändert. Bei der Region von besonderem Interesse kann es sich beispielsweise um ein verfolgtes Objekt wie z.B. ein vorausfahrendes Fahrzeug handeln, das während des Fahrbetriebs eines den Sensor tragenden Fahrzeugs seine Position relativ zu dem Fahrzeug ändert, wodurch die dem vorausfahrenden Fahrzeug entsprechende Region von besonderem Interesse ihre Lage innerhalb des Sichtbereiches des Sensors verändert. Das Halten der vorgebbaren Position für den Störbereich erfolgt insbesondere unter zeitweiser oder permanenter Bewegung der Schutzabdeckung. In dem vorstehend genannten Beispiel hat somit eine Bewegung des vorausfahrenden Fahrzeugs relativ zum Sensor eine entsprechende Bewegung der Sensorabdeckung zur Folge, durch die sichergestellt ist, daß die Erfassung der Region von besonderem Interesse durch den Störbereich nicht beeinträchtigt wird.

Erfindungsgemäß kann die Position, in welche der Störbereich überführt und/oder in welcher der Störbereich gehalten wird, in Abhängigkeit von erfaßten Situationen im Überwachungsbereich und/oder in Abhängigkeit von erkannten Objekten im Überwachungsbereich vorgegeben werden. Die Erfassung der Situationen und die Erkennung der Objekte im Überwachungsbereich kann dabei mittels des Sensors selbst und/oder mittels sensorfremder Einrichtungen erfolgen.

In einer weiteren bevorzugten Ausführungsform der Erfindung wird der Störbereich auf ein Objekt ausreichender Größe gerichtet und insbesondere diesem Objekt nachgeführt. Bei einem derartigen Objekt handelt es sich z.B. um einen vorausfahrenden LKW.

In einer weiteren Ausführungsform der Erfindung wird vorgeschlagen, daß der Störbereich in einen ausreichend großen Winkelabstand zu einem Objekt überführt und insbesondere in diesem Abstand gehalten wird. Ein derartiges Objekt ist beispielsweise ein vorausfahrendes Motorrad.

Erfindungsgemäß kann somit gezielt von den jeweiligen Gegebenheiten im Überwachungsbereich, die insbesondere vom Sensor selbst erfaßt werden, eine Änderung des Bewegungszustands der Schutzabdeckung initiiert werden, um für eine Abmilderung oder Beseitigung der störenden Wirkung von zuvor als solche erkannten Störungen oder potentiellen Störungen zu sorgen.

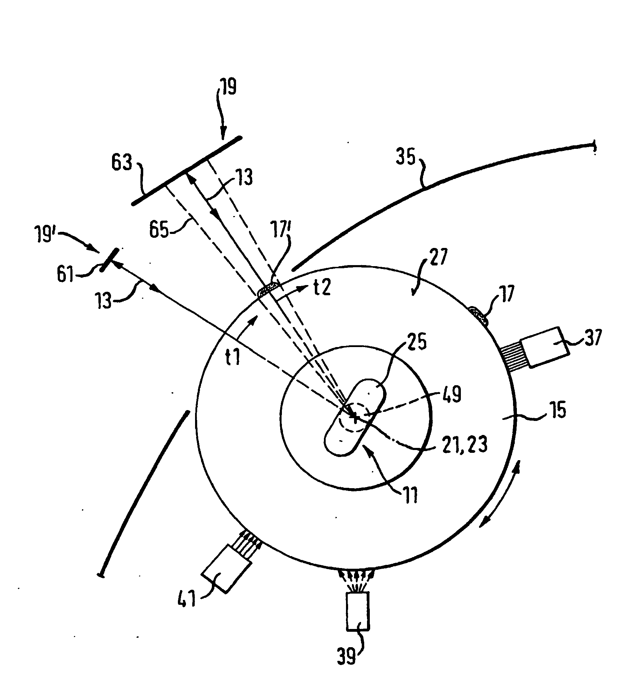

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben, deren einzige Figur schematisch in einer Draufsicht eine Ausführungsform einer zur Ausführung des erfindungsgemäßen Verfahrens geeigneten optoelektronischen Erfassungseinrichtung zeigt.

Die erfindungsgemäß verwendete optoelektronische Erfassungseinrichtung umfaßt einen Sensor 11 mit einer Sendeeinheit 49 in Form einer Laserdiode und mit einer Strahlungsumlenkeinrichtung in Form eines Drehspiegels 25. Die Laserdiode 49 sendet Strahlungspulse aus, die über den Drehspiegel 25 in einen Überwachungsbereich gelenkt, von im Überwachungsbereich befindlichen Objekten 61, 63, auf die im folgenden näher eingegangen wird, reflektiert und wiederum über den Drehspiegel 25 auf eine nicht dargestellte Empfangseinheit gelenkt werden. Die Entfernungen zu den Objekten 61, 63 werden nach einem Strahlungspulslaufzeitmeßverfahren ermittelt.

Während des Betriebs rotiert der Drehspiegel 25 mit einer konstanten Drehzahl, so daß die Abtaststrahlung 13 nacheinander in unterschiedliche Richtungen ausgesandt wird. In dem dargestellten Beispiel wird zu einem Zeitpunkt t1 die Abtaststrahlung 13 von dem Objekt 61 und zu einem späteren Zeitpunkt t2 von dem Objekt 63 reflektiert.

Zusätzlich zu den Entfernungen mißt der Laserscanner 11 für jeden ausgesandten Abtastpuls oder -strahl und damit für jede gemessene Entfernung die Winkelrichtung bezüglich einer vorgegebenen Achse.

Die ausgesandte und reflektierte Strahlung 13 tritt durch eine den Laserscanner 11 umgebende Schutzabdeckung 15 hindurch, die in Form einer rotationssymmetrischen, konusförmigen Schutzhaube aus einem für die verwendete Strahlung 13 durchlässigen Material mit trapezförmigem Querschnitt derart vorgesehen ist, daß die Strahlung 13 durch eine bezüglich ihrer Ausbreitungsrichtung geneigte Wand 27 der Schutzhaube 15 hindurchtritt.

Der Laserscanner 11 und die Schutzabdeckung 15 sind in einem Fahrzeugbauteil 35 z.B. in Form eines Scheinwerfers, eines Außenspiegels oder einer Stoßstange des Fahrzeugs derart angeordnet, daß ein Durchlaß in dem Bauteil 35 für die sich ausbreitende und reflektierte Strahlung 13 zumindest im wesentlichen durch die Schutzabdeckung 15 verschlossen wird. Die Austrittsfläche für die Strahlung 13 wird somit nicht von dem Fahrzeugbauteil 35, sondern von der rotationssymmetrischen Schutzhaube 15 gebildet.

Die Schutzabdeckung 15 kann mittels einer nicht dargestellten Antriebseinrichtung um eine mit der Rotationsachse 23 des Drehspiegels 25 zusammenfallende Drehachse 21 in beide Richtungen und mit grundsätzlich beliebig veränderbarer Drehzahl wahlweise ununterbrochen oder zeitweise gedreht werden.

Es sind mit der Durchtrittswand 27 der Schutzabdeckung 15 zusammenwirkende Reinigungseinrichtungen 37, 39, 41 vorgesehen. Die Reinigungseinrichtungen umfassen eine Reinigungsbürste 37, eine Druckluftquelle 39 sowie eine Flüssigkeitsausstoßeinrichtung 41.

Während des Abtastbetriebs des Laserscanners 11 wird die Schutzhaube 15 derart insbesondere situations-, verschmutzungs- und/oder gefährdungsadaptiv bewegt, daß erkannte Störungen, die den Betrieb des Laserscanners 11 zumindest potentiell beeinträchtigen können, hinsichtlich ihrer Störwirkung abgemildert oder beseitigt werden. Das Erkennen derartiger Störungen wurde im Einleitungsteil ausführlich beschrieben, worauf hiermit verwiesen wird. Im Fall von auf der Außenseite der Schutzhaube 15 vorhandenen Verschmutzungen 17, 17' kann der Laserscanner 11 selbst die Störung z.B. dadurch erkennen, daß keine reflektierte Strahlung oder lediglich reflektierte Strahlung mit einer einen erwarteten Wert unterschreitenden Intensität registriert wird.

Auf das Erkennen einer Störung wird erfindungsgemäß dadurch reagiert, daß der Bewegungszustand der Schutzabdeckung 15 verändert wird. Dies kann auf unterschiedliche Art und Weise geschehen. Beispielsweise kann die Schutzabdeckung 15 aus einem Stillstandszustand heraus in Drehung versetzt werden, wodurch eine zuvor im Sichtbereich des Scanners 11 gelegene Verschmutzung 17 aus dem Sichtbereich heraus bewegt wird.

Um die Verschmutzung 17 zu beseitigen, kann die Schutzabdeckung 15 so weit gedreht werden, daß die Verschmutzung 17 in den Wirkungsbereich der Reinigungseinrichtungen 37, 39, 41 gelangt. Die Schutzabdeckung 15 kann während des Abtastbetriebs des Scanners 11 ununterbrochen gedreht werden, so daß auftretende Verschmutzungen 17 automatisch in den Wirkungsbereich der Reinigungseinrichtungen 37, 39, 41 gelangen und sofort beseitigt werden. Im Fall einer ununterbrochen rotierenden Schutzabdeckung 15 ist deren Drehrichtung bevorzugt entgegengesetzt zu derjenigen des Drehspiegels 25. Die Drehzahlen können übereinstimmen oder voneinander verschieden sein.

Nach dem Erkennen einer Störung kann die Bewegung der Schutzabdeckung 15 derart auf die Drehbewegung des Drehspiegels 25 abgestimmt werden, daß die ausgesandte Strahlung nicht stets in der gleichen Winkelrichtung durch die Störung - z.B. durch eine Verschmutzung oder Beschädigung der Schutzabdeckung 15 - beeinträchtigt wird. Beispielsweise kann die mit einer konstanten Drehzahl rotierende Schutzabdeckung 15 vorübergehend beschleunigt oder abgebremst werden und anschließend wieder mit der ursprünglichen Drehzahl rotieren, um so gewissermaßen eine "Phasenverschiebung" bezüglich des Drehspiegels 25 zu realisieren.

Die Störwirkung einer Verschmutzung 17' kann auch dadurch abgemildert oder beseitigt werden, daß die Verschmutzung 17' durch Bewegen der Schutzabdeckung 15 in eine vorgegebene Position relativ zu einer oder mehreren Regionen 19, 19' von besonderem Interesse überführt und in dieser Position gehalten wird. Bei den Regionen 19, 19' handelt es sich beispielsweise um im Sichtbereich des Scanners 11 gelegene und als solche erkannte Objekte 61, 63.

Wenn lediglich die äußeren Abmessungen derartiger Objekte von Interesse sind, dann kann beispielsweise die Abdeckung 15 so bewegt werden, daß die Verschmutzung 17' mit einem Objekt 63 derart ausgerichtet wird, daß derjenige, in der Figur gestrichelt angedeutete Teil 65 des Sichtbereiches des Scanners 11, der durch die Verschmutzung 17' beeinträchtigt ist, vollständig auf dem Objekt 63 liegt. Die Erkennung und Verfolgung des Objekts 63 wird hierdurch nicht beeinträchtigt, da die Abmessungen bzw. die unverdeckten Endbereiche des Objekts 63 nach wie vor mittels des Scanners 11 detektiert werden können. In Abhängigkeit von der Entfernung zu dem Scanner 11 muß das Objekt 63 von ausreichender Größe sein, um eine Verschmutzung 17' auf diese Weise unschädlich zu machen. Beispielsweise kann eine Verschmutzung 17' auf dem Heck eines vorausfahrenden LKW "positioniert" werden.

Ein Zweirad wie beispielsweise ein vorausfahrendes Motorrad würde bei gleicher Entfernung für eine derartige Störungsbeseitigung nicht die erforderliche Mindestgröße aufweisen, sondern teilweise oder vollständig im "Schatten" der Verschmutzung 17' liegen. In einem solchen Fall, wie er in der Figur durch das Objekt 61 angedeutet ist, kann erfindungsgemäß die Schutzabdeckung 15 derart bewegt werden, daß die Verschmutzung 17' aus der dem Objekt 61 entsprechenden Region 19' von besonderem Interesse heraus bewegt und in einen ausreichend großen Winkelabstand zu dem Objekt 61 überführt und in diesem Winkelabstand gehalten wird.

Wenn sich während des Abtastbetriebs die Relativlage zwischen dem am Fahrzeug angebrachten Laserscanner 11 und den im Überwachungsbereich befindlichen Objekten 61, 63 ändert, dann wird die Lage der Verschmutzung 17' im Sichtbereich des Scanners 11 durch entsprechendes Verdrehen der Schutzabdeckung 15 derart verändert, daß die Verschmutzung 17' auf dem LKW-Heck 63 bzw. in dem vorgegebenen Winkelabstand zu dem Motorrad 61 gehalten wird.

Diese automatische Nachführung der Schutzabdeckung 15 während des Abtastbetriebs des Laserscanners 11 ist insbesondere dann von Vorteil, wenn es sich zum einen um hartnäckige, nicht beseitigbare Verschmutzungen oder Beschädigungen der Schutzabdeckung 15 handelt und zum anderen keine "toten", d.h. nicht zum benötigten Sichtbereich des Scanners 11 gehörenden Winkelbereiche vorhanden sind, in welche die Störbereiche gedreht werden könnten. Dies ist beispielsweise bei einem Laserscanner der Fall, dessen direkter Sichtbereich 360° umfaßt oder der mit bezüglich des Drehspiegels 25 stationären Strahlungsumlenkeinrichtungen versehen ist, über die in bestimmten Winkelbereichen eine indirekte Aussendung von Strahlung in den Überwachungsbereich erfolgt.

Der in der Figur dargestellte Laserscanner 11, dessen direkter Sichtbereich durch das Fahrzeugbauteil 35 begrenzt ist, könnte mit derartigen, außerhalb seines direkten Sichtbereiches gelegenen Strahlungsumlenkeinrichtungen versehen werden, die es ggf. unmöglich machen, Reinigungseinrichtungen vorzusehen und Störbereiche auf der Schutzabdeckung 15 in dauerhaft nichtstörende Positionen zu drehen.

Die Störungsbeseitigung erfolgt in diesen Fällen durch eine situationsadaptive Bewegung der Schutzabdeckung 15 in Abhängigkeit von der Situation im Überwachungsbereich und insbesondere von der jeweiligen Lage erkannter Objekte 61, 63 relativ zum Scanner 11.

Es wird hiermit ausdrücklich Bezug genommen auf die am gleichen Tag wie die vorliegende Anmeldung hinterlegte deutsche Patentanmeldung "Optoelektronische Erfassungseinrichtung" (Anwaltsaktenzeichen: S 7861 DE 10151981.8) der Anmelderin, in der insbesondere der Aufbau und die Anordnung einer Schutzabdeckung sowie dieser zugeordnete Antiverschmutzungseinrichtungen beschrieben sind und deren Inhalt hiermit durch Bezugnahme zum Inhalt auch der vorliegenden Anmeldung gemacht wird.

### Bezugszeichenliste

- 11: Sensor
- 13: Strahlung
- 15: Schutzabdeckung, Schutzhaube
- 17, 17': Störbereiche, Verschmutzungen
- 19, 19': Region von besonderem Interesse
- 21: Drehachse
- 23: Rotationsachse
- 25: Drehspiegel
- 27: Durchtrittswand der Schutzabdeckung
- 35: Fahrzeugbauteil
- 37: Reinigungseinrichtung
- 39: Reinigungseinrichtung
- 41: Reinigungseinrichtung
- 49: Strahlungsquelle, Laserdiode
- 61: Objekt, Zweirad
- 63: Objekt, LKW
- 65: Teil des Sichtbereiches

## Patentansprüche

1. Verfahren zur Objekterkennung und/oder -verfolgung mittels einer insbesondere an einem Fahrzeug angebrachten optoelektronischen Erfassungseinrichtung, die wenigstens einen Sensor (11), mit dem während des Betriebs in einen Überwachungsbereich insbesondere gepulste elektromagnetische Strahlung (13) ausgesandt und aus dem Überwachungsbereich reflektierte Strahlung (13) empfangen und ausgewertet wird, und eine den Sensor (11) zumindest teilweise umgebende und wenigstens bereichsweise für die verwendete Strahlung durchlässige Schutzabdeckung (15) umfaßt, bei dem
- den Betrieb des Sensors (11) zumindest potentiell beeinträchtigende Störungen erkannt werden, und
- im Anschluß an die Erkennung einer derartigen Störung der Bewegungszustand der Schutzabdeckung (15) relativ zum Sensor (11) derart verändert wird, daß die Störwirkung abgemildert oder beseitigt wird,
**dadurch gekennzeichnet,**
**dass** der Sensor (11) während des Betriebs eine Abtastbewegung ausführt,
**dass** auf der Basis von mittels des Sensors (11) gewonnenen Informationen die Art der Störungen erkannt wird, und
**dass** der Bewegungszustand der Schutzabdeckung (15) in Abhängigkeit von der Art der erkannten Störung unterschiedlich verändert wird.

2. Verfahren nach Anspruch 1,
**dadurch gekennzeichnet, daß**
als Sensor (11) ein Laserscanner verwendet wird, insbesondere ein innerhalb wenigstens einer Abtastebene bevorzugt nach einem Pulslaufzeitmeßverfahren Entfernungen und zu jeder Entfernung einen auf eine vorgegebene Achse bezogenen Winkel messender Laserscanner.

3. Verfahren nach Anspruch 1 oder 2,
**dadurch gekennzeichnet, daß**
die Änderung des Bewegungszustandes der Schutzabdeckung (15) im Anschluß an die Erkennung einer Störung automatisch erfolgt.

4. Verfahren nach einem der vorhergehenden Ansprüche,
**dadurch gekennzeichnet, daß**
der Bewegungszustand der Schutzabdeckung (15) situationsadaptiv verändert wird, insbesondere in Abhängigkeit von vom Sensor (11) selbst und von sensorfremden Einrichtungen erfaßten Situationen im Überwachungsbereich.

5. Verfahren nach einem der vorhergehenden Ansprüche,
**dadurch gekennzeichnet, daß**
der Bewegungszustand der Schutzabdeckung (15) gefährdungsadaptiv verändert wird, insbesondere in Abhängigkeit von vom Sensor (11) selbst und von sensorfremden Einrichtungen erfaßten Gefahrensituationen im Überwachungsbereich.

6. Verfahren nach einem der vorhergehenden Ansprüche,
**dadurch gekennzeichnet, daß**
eine Bewegung, insbesondere eine Drehbewegung, der Schutzabdeckung (15) verlangsamt oder gestoppt wird, wenn eine mit einer bestimmten Wahrscheinlichkeit aufgrund der Bewegung der Schutzabdeckung (15) zu einer Gefährdung einer Person, eines Gegenstandes und/oder des Sensors (11) selbst führende Situation erfaßt wird.

7. Verfahren nach einem der vorhergehenden Ansprüche,
**dadurch gekennzeichnet, daß**
der Bewegungszustand der Schutzabdeckung (15) verschmutzungsadaptiv verändert wird, insbesondere in Abhängigkeit von der Art und/oder dem Grad einer insbesondere vom Sensor (11) selbst also solche erkannten Verschmutzung der Schutzabdeckung (15).

8. Verfahren nach einem der vorhergehenden Ansprüche,
**dadurch gekennzeichnet, daß**
Störungen auf der Basis von mittels sensorfremder Einrichtungen gewonnenen Informationen erkannt werden.

9. Verfahren nach einem der vorhergehenden Ansprüche,
**dadurch gekennzeichnet, daß**
im Anschluß an die Erkennung einer Störung die Schutzabdeckung (15) aus einem Stillstandszustand heraus in Bewegung gesetzt wird.

10. Verfahren nach einem der Ansprüche 1 bis 8,
**dadurch gekennzeichnet, daß**
die Schutzabdeckung (15) zumindest während des Abtastbetriebs des Sensors (11) ununterbrochen bewegt wird.

11. Verfahren nach einem der vorhergehenden Ansprüche,
**dadurch gekennzeichnet, daß**
als Bewegungsart der insbesondere eine rotationssymmetrische Form aufweisenden Schutzabdeckung (15) eine Drehbewegung vorgesehen wird.

12. Verfahren nach einem der vorhergehenden Ansprüche,
**dadurch gekennzeichnet, daß**
als Störung ein die Ausbreitung der vom Sensor (11) ausgesandten und/oder zu empfangenen Strahlung (13) zumindest potentiell beeinträchtigender Störbereich (17, 17') der Schutzabdeckung (15) erkannt und der Störbereich (17, 17') durch Bewegen der Schutzabdeckung (15) in eine nichtstörende Position überführt wird.

13. Verfahren nach Anspruch 12,
**dadurch gekennzeichnet, daß**
der Störbereich (17) aus dem Sichtbereich des Sensors (11) heraus bewegt wird.

14. Verfahren nach Anspruch 12 oder 13,
**dadurch gekennzeichnet, daß**
der Störbereich (17) in den Wirkungsbereich von Reinigungseinrichtungen (37, 39, 41) hinein bewegt wird.

15. Verfahren nach einem der Ansprüche 12 bis 14,
**dadurch gekennzeichnet, daß**
der Störbereich (17') innerhalb des Sichtbereiches des Sensors (11) bewegt wird.

16. Verfahren nach einem der Ansprüche 12 bis 15,
**dadurch gekennzeichnet, daß**
der Störbereich (17') aus einer Region (19') von besonderem Interesse des Sichtbereiches des Sensors (11) heraus bewegt wird.

17. Verfahren nach einem der Ansprüche 12 bis 16,
**dadurch gekennzeichnet, daß**
die Schutzabdeckung (15) derart bewegt wird, daß der Störbereich (17') in eine vorgebbare Position relativ zu wenigstens einer Region (19, 19') von besonderem Interesse des Sichtbereiches des Sensors (11) überführt wird.

18. Verfahren nach einem der Ansprüche 12 bis 17,
**dadurch gekennzeichnet, daß**
der Störbereich (17') in einer vorgebbaren Position relativ zu wenigstens einer insbesondere ihre Lage innerhalb des Sichtbereiches des Sensors (11) verändernden Region (19, 19') von besonderem Interesse des Sichtbereiches des Sensors (11) gehalten wird, und zwar insbesondere unter zeitweiser oder permanenter Bewegung der Schutzabdeckung (15).

19. Verfahren nach Anspruch 17 oder 18,
**dadurch gekennzeichnet, daß**
die Position in Abhängigkeit von mittels des Sensors (11) selbst und/oder sensorfremder Einrichtungen erfaßten Situationen im Überwachungsbereich vorgegeben wird.

20. Verfahren nach einem der Ansprüche 17 bis 19,
**dadurch gekennzeichnet, daß**
die Position in Abhängigkeit von insbesondere mittels des Sensors (11) selbst und/oder sensorfremder Einrichtungen erkannten Objekten (61, 63) im Überwachungsbereich vorgegeben wird.

21. Verfahren nach einem der Ansprüche 12 bis 20,
**dadurch gekennzeichnet, daß**
der Störbereich (17') durch Bewegen der Schutzabdeckung (15) auf ein Objekt (63) ausreichender Größe gerichtet und insbesondere diesem Objekt (63) nachgeführt wird.

22. Verfahren nach einem der Ansprüche 12 bis 20,
**dadurch gekennzeichnet, daß**
der Störbereich (17') durch Bewegen der Schutzabdeckung (15) in einen ausreichend großen Winkelabstand zu einem Objekt (61) überführt und insbesondere in diesem Winkelabstand gehalten wird.

## Claims

1. A method of object recognition and/or object tracking by means of an optoelectronic detection device which is in particular attached to a vehicle and which comprises at least one sensor (11), with which, during operation, radiation (13), in particular pulsed electromagnetic radiation, is transmitted into a monitored zone and radiation (13) reflected out of the monitored zone is received and evaluated, and a protective cover (15), which surrounds the sensor (11) at least in part and is at least regionally permeable for the radiation used, wherein
- disturbances at least potentially impairing the operation of the sensor (11) are recognised; and,
- subsequent to the recognition of a disturbance of this type, the state of movement of the protective cover (15) relative to the sensor (11) is changed such that the effect of the disturbance is attenuated or eliminated
**characterised in that**
the sensor (11) carries out a scanning movement during the operation;
**in that** the type of the disturbances is recognised on the basis of information gained by means of the sensor (11); and
**in that** the state of movement of the protective cover (15) is changed differently in dependence on the type of disturbance recognised.

2. A method in accordance with claim 1, **characterised in that** a laser scanner, in particular a laser scanner measuring distances within at least one scanning plane, preferably according to a pulse run time measuring method, and measuring an angle relating to a predetermined axis for each distance, is used as the sensor (11).

3. A method in accordance with claim 1 or claim 2, **characterised in that** the change in the state of movement of the protective cover (15) takes place automatically subsequent to the recognition of a disturbance.

4. A method in accordance with any one of the preceding claims, **characterised in that** the state of movement of the protective cover (15) is changed in a manner adaptive to the situation, in particular in dependence on situations in the monitored zone detected by the sensor (11) itself and/or by devices external to the sensor.

5. A method in accordance with any one of the preceding claims, **characterised in that** the state of movement of the protective cover (15) is changed in a manner adaptive to a hazard, in particular in dependence on danger situations in the monitored zone detected by the sensor (11) itself and/or by devices external to the sensor.

6. A method in accordance with any one of the preceding claims, **characterised in that** a movement, in particular a rotary movement, of the protective cover (15) is slowed down or stopped when a situation is detected which will result with a specific probability due to the movement of the protective cover (15) in a hazard for a person, for an article and/or for the sensor (11) itself.

7. A method in accordance with any one of the preceding claims, **characterised in that** the state of movement of the protective cover (15) is changed in a manner adaptive to contamination, in particular in dependence on the manner and/or on the degree of a contamination of the protective cover (15) in particular recognised as such by the sensor (11) itself.

8. A method in accordance with any one of the preceding claims, **characterised in that** the disturbances are recognised on the basis of information gained by means of devices external to the sensor.

9. A method in accordance with any one of the preceding claims, **characterised in that** the protective cover (15) is set into motion from a state of rest subsequent to the recognition of a disturbance.

10. A method in accordance with any one of the claims 1 to 8, **characterised in that** the protective cover (15) is moved without interruption at least during the sampling operation of the sensor (11).

11. A method in accordance with any one of the preceding claims, **characterised in that** a rotary movement is provided as the type of movement of the protective cover (15) in particular having a rotationally symmetrical shape.

12. A method in accordance with any one of the preceding claims, **characterised in that** a disturbance region (17, 17') of the protective cover (15) at least potentially impairing the propagation of the radiation (13) transmitted and/or to be received by the sensor (11) is recognised as the disturbance and the disturbance region (17, 17') is moved into a non-disturbing position by movement of the protective cover (15).

13. A method in accordance with claim 12, **characterised in that** the disturbance region (17) is moved out of the field of view of the sensor (11).

14. A method in accordance with claim 12 or claim 13, **characterised in that** the disturbance region (17) is moved into the effective region of cleaning devices (37, 39, 41).

15. A method in accordance with any one of the claims 12 to 14, **characterised in that** the disturbance region (17') is moved inside the field of view of the sensor (11).

16. A method in accordance with any one of the claims 12 to 15, **characterised in that** the disturbance region (17') is moved out of a region (19') of particular interest of the field of view of the sensor (11).

17. A method in accordance with any one of the claims 12 to 16, **characterised in that** the protective cover (15) is moved such that the disturbance region (17') is moved into a predeterminable position relative to at least one region (19, 19') of particular interest of the field of view of the sensor (11).

18. A method in accordance with any one of the claims 12 to 17, **characterised in that** the disturbance region (17') is held in a predeterminable position relative to at least one region (19, 19') of particular interest of the field of view of the sensor (11) which in particular changes its position within the field of view of the sensor (11), and indeed in particular with a temporary or permanent movement of the protective cover (15).

19. A method in accordance with claim 17 or claim 18, **characterised in that** the position is predetermined in dependence on situations in the monitored zone detected by means of the sensor (11) itself and/or by means of devices external to the sensor.

20. A method in accordance with any one of the claims 17 to 19, **characterised in that** the position is predetermined in dependence on objects (61, 63) in the monitored zone in particular detected by means of the sensor (11) itself and/or by means of devices external to the sensor.

21. A method in accordance with any one of the claims 12 to 20, **characterised in that** the disturbance region (17') is directed to an object (63) of sufficient size by movement of the protective cover (15) and is in particular tracked on this object (63).

22. A method in accordance with any one of the claims 12 to 20, **characterised in that** the disturbance region (17') is moved into a sufficiently large angular spacing from an object (61) by movement of the protective cover (15) and is in particular held at this angular spacing.

## Revendications

1. Procédé de reconnaissance d'objets et/ou de poursuite d'objets au moyen d'un système de détection optoélectronique monté en particulier sur un véhicule, lequel comprend au moins un capteur (11) avec lequel, pendant le fonctionnement, un rayonnement électromagnétique (13), en particulier pulsé est émis dans une zone de surveillance, et un rayonnement (13) réfléchi hors de la zone de surveillance est reçue et évaluée, et comprenant un couvercle de protection (15) entourant au moins partiellement le capteur (11) et transparent au moins par régions pour le rayonnement utilisé, procédé dans lequel
- sont reconnues des perturbations qui perturbent de manière au moins potentielle le fonctionnement du capteur (11), et
- à la suite de la reconnaissance d'une telle perturbation, l'état de mouvement du couvercle de protection (15) par rapport au capteur (11) est modifié de telle sorte que l'effet perturbant est modéré ou éliminé,
**caractérisé en ce que**
le capteur (11) effectue pendant le fonctionnement un mouvement de balayage,
**en ce que** le type de perturbation est reconnu sur la base d'informations obtenues au moyen du capteur (11), et
**en ce que** l'état de mouvement du couvercle de protection (15) est modifié de manière différente en fonction du type de perturbation reconnu.

2. Procédé selon la revendication 1,
**caractérisé en ce que**
l'on utilise à titre de capteur (11) un scanner au laser, en particulier un scanner au laser mesurant, à l'intérieur d'au moins un plan de balayage, des distances, et pour chaque distance un angle par rapport à un axe prédéterminé, de préférence selon un procédé de mesure de durée de temps d'impulsion.

3. Procédé selon l'une des revendications 1 ou 2,
**caractérisé en ce que**
la modification de l'état de mouvement du couvercle de protection (15) a lieu automatiquement à la suite de la reconnaissance d'une perturbation.

4. Procédé selon l'une des revendications précédentes,
**caractérisé en ce que**
l'état de mouvement du couvercle de protection (15) est modifié pour s'adapter à la situation, en particulier en fonction de situations dans la zone de surveillance qui sont détectées par le capteur (11) lui-même et par des systèmes étrangers au capteur.

5. Procédé selon l'une des revendications précédentes,
**caractérisé en ce que**
l'état de mouvement du couvercle de protection (15) est modifié pour s'adapter au danger, en particulier en fonction de situations dangereuses dans la zone de surveillance qui sont détectées par le capteur (11) lui-même et par des systèmes étrangers au capteur.

6. Procédé selon l'une des revendications précédentes,
**caractérisé en ce que**
un mouvement, en particulier un mouvement de rotation, du couvercle de protection (15), est ralenti ou arrêté lorsqu'on détecte une situation menant à une mise en danger d'une personne, d'un objet et/ou du capteur lui-même avec une certaine probabilité en raison du mouvement du couvercle de protection.

7. Procédé selon l'une des revendications précédentes,
**caractérisé en ce que**
l'état de mouvement du couvercle de protection (15) est modifié pour s'adapter à la salissure, en particulier en fonction du type et/ou du degré d'une salissure du couvercle de protection (15) reconnue en particulier en tant que telle par le capteur (11) lui-même.

8. Procédé selon l'une des revendications précédentes,
**caractérisé en ce que**
des perturbations sont reconnues sur la base d'informations obtenues au moyen de systèmes étrangers au capteur.

9. Procédé selon l'une des revendications précédentes,
**caractérisé en ce que**
à la suite de la reconnaissance d'une perturbation, le couvercle de protection (15) est mis en mouvement en partant d'un état d'arrêt.

10. Procédé selon l'une des revendications 1 à 8,
**caractérisé en ce que**
le couvercle de protection (15) est déplacé sans interruption au moins pendant le fonctionnement de balayage du capteur (11).

11. Procédé selon l'une des revendications précédentes,
**caractérisé en ce que**
il est prévu un mouvement de rotation à titre de mode de mouvement du couvercle de protection (15) présentant en particulier une forme à symétrie de révolution.

12. Procédé selon l'une des revendications précédentes,
**caractérisé en ce que**
l'on reconnaît comme perturbation une région perturbée (17, 17') du couvercle de protection (15), qui défavorise de façon au moins potentielle la propagation du rayonnement (13) émis et/ou du rayonnement à recevoir, et la région perturbée (17, 17') est amenée dans une position non perturbatrice en déplaçant le couvercle de protection (15).

13. Procédé selon la revendication 12,
**caractérisé en ce que**
la région perturbée (17) est déplacée hors du champ visuel du capteur (11).

14. Procédé selon la revendication 12 ou 13,
**caractérisé en ce que**
la région perturbée (17) est déplacée jusque dans le champ d'action de systèmes de nettoyage (37, 39, 41).

15. Procédé selon l'une des revendications 12 à 14.
**caractérisé en ce que**
la région perturbée (17') est déplacée à l'intérieur du champ visuel du capteur (11).

16. Procédé selon l'une des revendications 12 à 15,
**caractérisé en ce que**
la région perturbée (17') est déplacée hors d'une région (19') d'intérêt particulier du champ visuel du capteur (11).

17. Procédé selon l'une des revendications 12 à 16,
**caractérisé en ce que**
le couvercle de protection (15) est déplacé de telle sorte que la région perturbée (17') est amenée jusque dans une position prédéterminable par rapport à au moins une région (19, 19') d'intérêt particulier du champ visuel du capteur (11).

18. Procédé selon l'une des revendications 12 à 17,
**caractérisé en ce que**
la région perturbée (17') est maintenue dans une position prédéterminable par rapport à au moins une région (19, 19') d'intérêt particulier du champ visuel du capteur (11), laquelle modifie en particulier sa position à l'intérieur du champ visuel du capteur (11), et ceci en particulier sous déplacement temporaire ou permanent du couvercle de protection (15).

19. Procédé selon la revendication 17 ou 18,
**caractérisé en ce que**
la position est prédéterminée dans la zone de surveillance en fonction de situations détectées au moyen du capteur (11) lui-même et/ou au moyen de systèmes étrangers au capteur.

20. Procédé selon l'une des revendications 17 à 19,
**caractérisé en ce que**
la position est prédéterminée dans la zone de surveillance en fonction d'objets (61, 63) reconnus au moyen du capteur (11) lui-même et/ou au moyen de systèmes étrangers au capteur.

21. Procédé selon l'une des revendications 12 à 20,
**caractérisé en ce que**
la région perturbée (17') est dirigée sur un objet (63) de taille suffisante en déplaçant le couvercle de protection (15) et on lui fait en particulier suivre cet objet (63).

22. Procédé selon l'une des revendications 12 à 20,
**caractérisé en ce que**
la région perturbée (17') est amenée vers un objet (63) dans une distance angulaire suffisante en déplaçant le couvercle de protection (15) et elle est en particulier maintenue à cette distance angulaire.
